# DEMANDE DE BREVET EUROPEEN

(11) **EP 1 870 733 A2**
(43) Date de publication de la demande: **26.12.2007**
(21) Numéro de dépôt: 07110612.4
(22) Date de dépôt: 20.06.2007
(51) Int. Cl.: G01V 1/38

(54) **Ensemble pour former un conteneur de transport et/ou de manutention de batteries de sources sismiques comprenant une structure de base et des montants amovibles, et procédé d'utilisation correspondant**

(30) Priorité: 20.06.2006 FR 0605490
(71) Demandeur: Sercel, 44470 Carquefou (FR)
(72) Inventeur: Gros, Michel, 83320, CARQUEIRANNE (FR)
(74) Mandataire: Larcher, Dominique

(57) **Abrégé**

L'invention a pour objet un ensemble pour former un conteneur de transport et/ou de manutention d'au moins deux batteries de sources sismiques marines, lesdites batteries comprenant chacune au moins une série d'unités (1) formées par au moins deux sources sismiques marines (11),
caractérisé en ce qu'il comprend :
- une structure de base (2) comprenant un plancher (22) et un plafond (21) reliés par des montants centraux (23) s'étendant dans un plan sensiblement médian par rapport audit plancher (22) et audit plafond (21),
- des montants latéraux (5) destinés à relier de façon amovible les extrémités latérales dudit plancher (22) et les extrémités latérales dudit plafond (21).

## Description

Le domaine de l'invention est celui de l'acquisition de données sismiques. Plus précisément, l'invention concerne les équipements pour l'analyse de fonds marins.

L'invention concerne en particulier l'industrie de la prospection pétrolière par méthode sismique, mais peut s'appliquer à tout domaine mettant en oeuvre un réseau d'acquisition de données sismiques en milieu marin.

Dans le domaine de l'invention, les opérations d'acquisition, sur le terrain, de données géophysiques, mettent classiquement en oeuvre des réseaux de capteurs (désignés par le termes « hydrophones » pour ce qui concerne l'acquisition de données en milieu marin).

Pour recueillir les données géophysiques en milieu marin, on active une ou plusieurs sources sismiques immergées pour propager des trains d'ondes sismiques omnidirectionnelles.

Actuellement, les sources mises en oeuvre pour la réalisation d'études sismiques marines sont des canons à air.

Ces canons à air sont arrangés en arrays (batteries) et sont tractés derrière le navire d'étude.

Une batterie comprend :
- un flotteur ;
- un fourreau de commande, appelé ombilical, intégrant notamment une conduite pneumatique pour alimenter les canons à air, un câble pour la transmission d'un signal de synchronisation des canons... ;
- une série de canons à air.

Les canons à air ont une « signature » acoustique. Dans certain cas, il est demandé d'augmenter la puissance acoustique de la source. Pour cela, une solution consiste à réaliser des unités formées par deux, voire trois canons à airs, parallèles ou en ligne.

L'invention concerne le transport de batteries comprenant une série d'unités (classiquement cinq unités) de canons à air (ou plus généralement de sources sismiques marines), en particulier, mais non exclusivement parallèles.

Dans le domaine de l'invention, l'augmentation sensible de l'activité liée à l'exploration offshore a conduit les donneurs d'ordre à massivement investir dans des nouveaux bateaux dédiés à la sismique.

Cependant, la construction de ces bateaux est longue et coûteuse.

En parallèle, les besoins croissants du marché entraînent la nécessité de mettre en oeuvre davantage de bateaux.

Il apparaît donc souhaitable de disposer des sources sismiques facilement transportables, d'un site d'étude à l'autre, afin de permettre leur installation sur des bateaux de type « supply boat » (bateau ravitailleur).

Ces supply boat ainsi équipés deviennent des bateaux sources permettant de réaliser diverses études sismiques comme des études undershoot, OBC (Ocean Bottom Cable) par exemple ...

Tel que mentionné précédemment, ces sources sismiques sont généralement composées de canons à air (mais peuvent d'être d'un autre type) et sont installées en batterie (arrays) composées de plusieurs unités de canons à air (air gun) parallèles ou en ligne.

Cette disposition permet d'augmenter le niveau d'énergie émis par la source et de répondre aux caractéristiques acoustiques imposées par le client final (oil company).

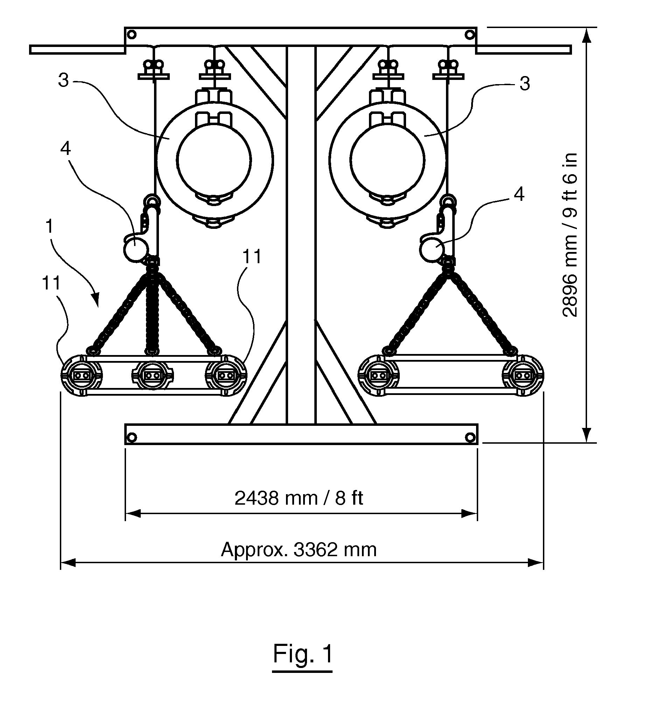

Cependant, telle qu'illustré par la figure 1, une disposition en parallèle des canons à air 11 entraîne des unités 1 présentant une largeur importante qui implique un encombrement (environ 3,3 m), lorsque deux batteries sont disposées cote à cote, qui ne s'insère pas dans des conteneurs standard (répondant à la norme ISO 668).

En effet, un conteneur ISO 668 peut présenter trois longueurs différentes : 20 pieds (6,096 m), 40 pieds (12,192 m) ou 45 pieds (13,716 m), deux hauteurs différentes : une standard (8 pieds 6 pouces = 2,591m) et une dite « High Cube » (2,896 m = 9 pieds 6 pouces) mais impose toujours la même largeur standard de 2,438 m (8 pieds) externe.

On note que ce problème d'encombrement peut également intervenir dans des dispositions différentes, notamment dans le cas des dispositions en ligne des sources sismiques.

Or, de façon générale, les avantages de transporter les batteries dans un conteneur sont notamment :
- un gain de temps pour le client (pas de mobilisation ou démobilisation importantes, liées par exemple à l'assemblage des arrays) ;
- pas de moyen de manutention supplémentaire des batteries à prévoir par le client car inclus dans le conteneur (rails, winch, moyen de levages ...);
- la possibilité d'utiliser des bateaux disponibles (supply boat) sur la zone de l'étude qui sera utilisé en tant que bateau source.

En revanche, le fait de devoir recourir à des conteneurs dont la largeur excède celle des conteneurs ISO implique un certain nombre d'inconvénients, au rang desquels on peut citer :
- l'affrètement de bateaux spéciaux (le nombre de ces bateaux permettant de transporter des containers non ISO étant limité) ;
- l'utilisation de voies maritimes spéciales ;
- l'accès à un nombre limité de ports ;
- le fait, sur route, de devoir circuler en convoi exceptionnel.

Bien entendu, ces contraintes tendent à augmenter considérablement le coût du transport.

Or, actuellement, l'état de la technique n'offre pas de solution pour transporter, sans augmentation sensible du coût, des batteries de sources sismiques marines parallèles par paires.

Bien entendu, il serait possible de ne disposer qu'une seule batterie par conteneur, mais cela impliquerait de doubler le nombre de conteneur, ce qui se traduirait également par une augmentation des coûts de transport, ainsi que de l'encombrement et du poids à bord des supply boat.

De plus, une autre contrainte dans la conception des conteneurs est liée à la certification CSC (Convention for Safe Container) qui porte sur :
- le fait que les conteneurs doivent être gerbables (superposés l'un sur l'autre) ;
- la résistance mécanique du conteneur.

L'invention a notamment pour objectif de pallier les inconvénients de l'art antérieur.

Plus précisément, l'invention a pour objectif de proposer une technique de transport de batteries de sources sismiques marines parallèles qui permet de réduire les coûts de transport.

L'invention a également pour objectif de fournir une telle technique qui soit adaptée aux contraintes imposées concernant tant les dimensions des conteneurs que la résistance mécanique de ceux-ci.

L'invention a aussi pour objectif de fournir une telle technique qui permet une manutention aisée des batteries.

Un autre objectif de l'invention est de fournir une telle technique qui soit simple de conception et facile à mettre en oeuvre.

Ces objectifs, ainsi que d'autres qui apparaîtront par la suite, sont atteints grâce à l'invention qui a pour objet un ensemble pour former un conteneur de transport et/ou de manutention d'au moins deux batteries de sources sismiques marines, lesdites batteries comprenant chacune au moins une série d'unités formées par au moins deux sources sismiques marines, caractérisé en ce qu'il comprend :
- une structure de base comprenant un plancher et un plafond reliés par des montants centraux s'étendant dans un plan sensiblement médian par rapport audit plancher et audit plafond,
- des montants latéraux destinés à relier de façon amovible les extrémités latérales dudit plancher et les extrémités latérales dudit plafond.

Ainsi, il est possible de concevoir une structure de base présentant, vu en bout, une forme générale en I, c'est à dire non fermée sur ses faces latérales.

Il est ainsi possible d'introduire dans la structure de base deux batteries dans une configuration selon laquelle elles occupent l'une à côté de l'autre un encombrement en largeur supérieure à la largeur des conteneurs ISO mentionnée précédemment.

Une fois les batteries introduites, les batteries peuvent ensuite être confinées dans la largeur de la structure de base.

Les montants latéraux sont alors rapportés sur la structure de base de façon à consolider celle-ci de telle sorte que, au final, le conteneur ainsi constitué réponde aux exigences de résistance mécanique imposées par la certification CSC mentionnée précédemment.

En d'autres termes, l'invention consiste à proposer une structure de base dimensionnée de façon optimisée du point de vue de la norme ISO 668, mais insuffisamment résistante du point de vue de la certification CSC (ceci du fait que ses faces latérales sont ouvertes pour permettre l'introduction des batteries dans une configuration encombrante), et à fournir les moyens pour consolider la structure de base une fois les batteries correctement disposées dans celle-ci (c'est-à-dire dans une configuration peu encombrante).

Selon une solution avantageuse, ledit plafond porte, de part et d'autre desdits montants centraux, des moyens supports d'au moins une batterie.

Dans ce cas, lesdits moyens supports sont montés mobiles par rapport audit plafond entre une position de transport dans laquelle ils s'inscrivent entre le plafond et ledit plancher et une position d'extraction/introduction dans laquelle ils s'étendent au moins partiellement en dehors de l'espace entre le plafond et ledit plancher.

Le conteneur ainsi constitué offre des moyens facilitant la manutention des batteries.

Avantageusement, lesdits moyens supports comprennent, de part et d'autre desdits montants centraux, au moins un longeron monté coulissant longitudinalement sur ledit plafond.

Bien entendu, d'autres moyens coulissants pourront être mis en oeuvre selon d'autres modes de réalisation envisageables, par exemple des chariots.

Préférentiellement, lesdits moyens supports comprennent, de part et d'autre desdits montants centraux, au moins deux longerons montés coulissant longitudinalement sur ledit plafond, l'un desdits longerons supportant lesdites sources sismiques marines et l'autre desdits longerons supportant au moins un flotteur que comprend chaque batterie.

Selon une autre caractéristique, ledit plancher et/ou ledit plafond comprennent un cadre rigidifié par un treillis de poutrelles.

Selon encore une autre caractéristique, au moins deux jambes de force relient lesdits montants centraux audit plancher et/ou audit plafond.

Selon encore une autre caractéristique, lesdits montants centraux sont reliés deux à deux par au moins une poutre formant avec lesdits montants centraux un treillis.

L'invention concerne également un procédé d'utilisation d'un ensemble tel que décrit précédemment, caractérisé en ce qu'il comprend les étapes de :
- introduction desdites batteries entre ledit plafond et ledit plancher, lesdits montants latéraux étant démontés de façon qu'au moins une desdites sources sismiques puissent s'étendre au-delà de la largeur de ladite structure de base ;
- confinement desdites batteries dans ladite structure de base de telle sorte que lesdites batteries s'inscrivent dans la largeur de ladite structure de base ;
- fixation desdits montants latéraux sur ladite structure de base.

Préférentiellement, un tel procédé d'utilisation comprend une étape de fixation desdites sources sismiques sur lesdits montants centraux ou sur des moyens rapportés sur lesdits montants centraux.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue d'une extrémité longitudinale d'une structure de base d'un ensemble pour former un conteneur selon l'invention, les batteries occupant une position déployée ;
- la figure 2 est une vue en perspective d'une structure de base d'un ensemble pour former un conteneur selon l'invention ;
- la figure 3 est une vue d'une extrémité longitudinale d'une structure de base d'un ensemble pour former un conteneur selon l'invention, les batteries occupant une position confinée ;
- la figure 4 est une vue en perspective d'une conteneur formé à l'aide d'un ensemble selon l'invention, en configuration de transport.

Tel qu'indiqué précédemment, le principe de l'invention réside dans le fait de concevoir un conteneur pour batteries de sources sismiques sous forme d'une structure de base à faces latérales ouvertes, sur laquelle des montants de rigidification sont rapportés une fois les batteries installées.

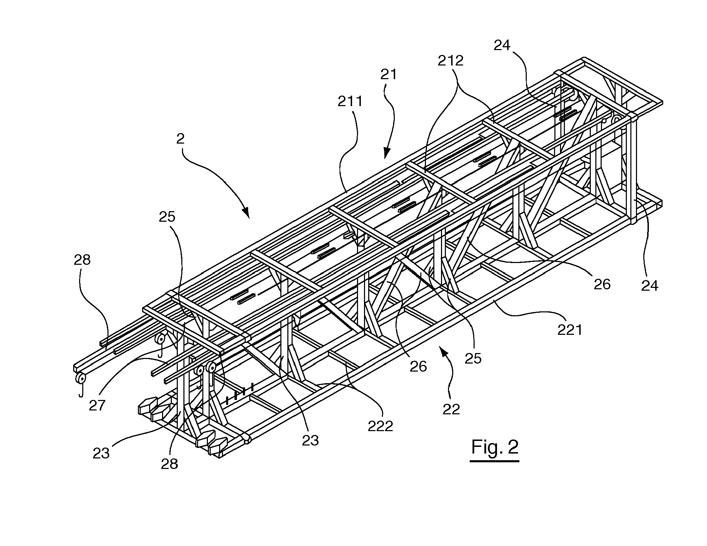

La figure 2 est une vue en perspective d'une structure de base 2 d'un ensemble pour former un conteneur selon l'invention.

Une telle structure de base se compose d'un plafond 21 et d'un plancher 22 reliés par une série de montants centraux 23.

Les montants 23 sont disposés et s'étendent dans un plan orthogonal au plancher et au plafond, ce plan étant sensiblement médian par rapport au plancher et au plafond.

Tel que cela apparaît, les extrémités latérales du plafond et du plancher ne sont pas reliées entre elles de telle sorte que les faces latérales de la structure de base sont ouvertes. La structure de base présente à une extrémité une forme générale en I.

On note que des montants latéraux 24 peuvent éventuellement être montés à demeure sur la structure de base, au voisinage d'une extrémité longitudinale de celle-ci. Cette extrémité constitue alors une extrémité arrière de sa structure, les batteries étant introduites longitudinalement par l'extrémité opposée comme cela va être expliqué plus en détails par la suite.

Préférentiellement, le plancher et le plafond sont constitués chacun par un cadre métallique, respectivement 211, 221, rigidifié par une pluralité de poutrelles transversales, respectivement 212, 222.

De plus, les montants centraux sont reliés au plancher et au plafond par des jambes de force 25, ceci par l'intermédiaire des poutrelles transversales 212, 222.

Des poutres de rigidification 26 sont également rapportés entre les montants centraux de façon à former avec ceux-ci un treillis.

Par ailleurs, pour chaque batterie (c'est-à-dire de part et d'autre des montants centraux 23), la structure de base présente des moyens supports prévus, selon le présent mode de réalisation, de façon à être mobiles par rapport au plafond entre une position de transport et une position d'extraction/ introduction des batteries.

On rappelle qu'une batterie comprend :
- un flotteur 3 ;
- un fourreau de commande 4 (classiquement désigné par le terme « ombilical » relié au flotteur et dans lequel passe des conduites de commande pneumatique et des moyens de transmission de signaux électriques) ;
- des unités 1 de sources sismiques 11, en l'occurrence parallèles, suspendues au fourreau 4.

Préférentiellement, ces moyens supports comprennent, pour chaque batterie :
- un longeron coulissant 27 pour supporter le flotteur ;
- un longeron coulissant 28 pour supporter le fourreau de commande supportant lui-même les unités 1.

Pour installer deux batteries de canons à air dans un container ISO 668, l'invention propose donc une structure de base en I, dont les faces latérales sont ouvertes.

Les longerons de manutention 27, 28 sont déployées longitudinalement hors de la structure de base et les batteries sont accrochées aux rails.

Lors de la mise en place du système dans la structure de base, une partie du matériel se trouve à l'extérieur de la structure de base.

Cette disposition ne gêne en rien le stockage du conteneur sur les navires lorsque le système est sorti de l'eau et réintégré dans le conteneur.

Les longerons 27,28 sont ensuite coulissés vers l'intérieur de la structure de base.

Les batteries de canons à air sont alors positionnées de part et d'autre des montants centraux 23 de la structure de base, les canons à air, parallèles selon l'exemple illustré, s'étendant dans une position selon laquelle les unités correspondantes s'étendent dans un plan sensiblement horizontal tel qu'illustré par la figure 1.

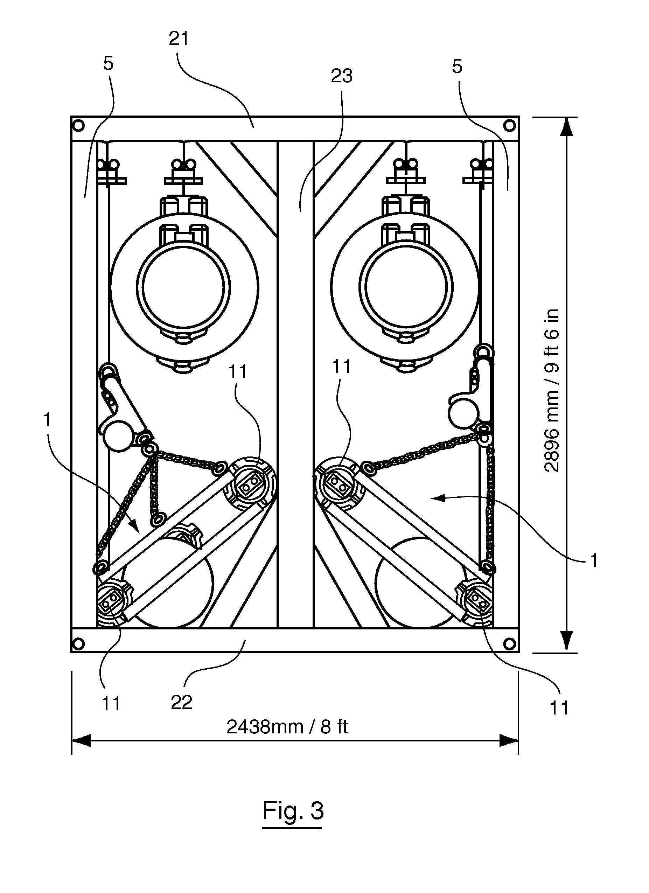

Pour le transport des batteries, celles-ci sont confinées à l'intérieur de la structure de base tel qu'illustré par la figure 3.

Pour cela, les unités sont inclinées de telle sorte que, selon l'exemple de la figure 3, l'un des canons 11 de l'unité 1 repose sur le plancher tandis que l'autre canon 11 est remonté contre un montant central 23.

Les unités étant mobiles à pivotement autour de l'axe retenant les chaînes des unités 1 sur le fourreau 4, on peut aisément fixer les canons sur une des poutres formant la structure centrale.

Cette opération est effectuée manuellement. Cependant, il est possible de relier chaque unité à un câble de manutention, ces câbles étant reliés à un filin qui permet de confiner automatiquement les canons à air à l'intérieur du container.

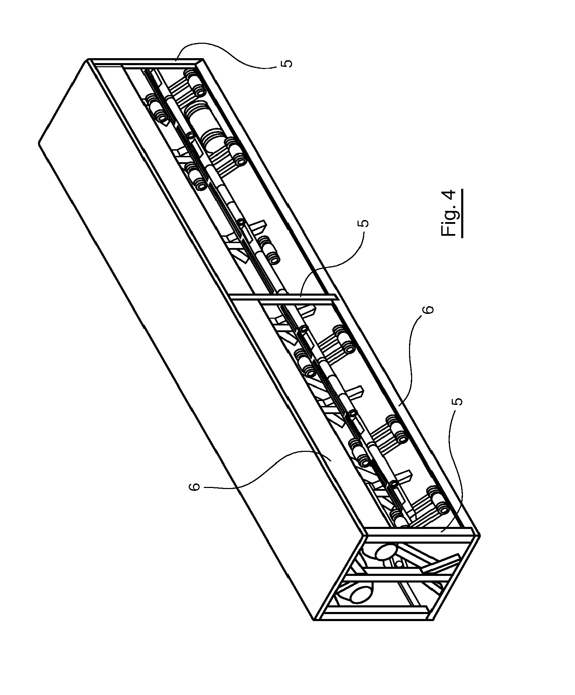

Une fois les batteries confinées dans la structure de base, celle-ci est rigidifiée par des montants latéraux 5 rapportés sur la structure de base de façon à relier le cadre du plancher et celui du plafond, un exemple du conteneur obtenu étant illustré par la figure 4.

Le nombre des montants latéraux, ainsi que leur disposition peut être adapté en fonction de la rigidité souhaitée.

Des parois hautes et basses 6 peuvent également être rapportées sur les faces latérales du conteneur.

Pour l'extraction des batteries, les montants latéraux sont démontés et les unités 1 sont décrochées de la structure pour leur permettre de reprendre la configuration illustrée par la figure 1.

## Revendications

1. Ensemble pour former un conteneur de transport et/ou de manutention d'au moins deux batteries de sources sismiques marines, lesdites batteries comprenant chacune au moins une série d'unités (1) formées par au moins deux sources sismiques marines (11),
**caractérisé en ce qu'**il comprend :
- une structure de base (2) comprenant un plancher (22) et un plafond (21) reliés par des montants centraux (23) s'étendant dans un plan sensiblement médian par rapport audit plancher (22) et audit plafond (21),
- des montants latéraux (5) destinés à relier de façon amovible les extrémités latérales dudit plancher (22) et les extrémités latérales dudit plafond (21).

2. Ensemble pour former un conteneur selon la revendication 1, **caractérisé en ce que** ledit plafond (21) porte, de part et d'autre desdits montants centraux (23), des moyens supports (27), (28) d'au moins une batterie.

3. Ensemble pour former un conteneur selon la revendication 2, **caractérisé en ce que** lesdits moyens supports (27), (28) sont montés mobiles par rapport audit plafond (21) entre une position de transport dans laquelle ils s'inscrivent entre le plafond (21) et ledit plancher (22) et une position d'extraction/introduction dans laquelle ils s'étendent au moins partiellement en dehors de l'espace entre le plafond (21) et ledit plancher (22).

4. Ensemble pour former un conteneur selon la revendication 3, **caractérisé en ce que** lesdits moyens supports (27), (28) comprennent, de part et d'autre desdits montants centraux (23), au moins un longeron monté coulissant longitudinalement sur ledit plafond (21).

5. Ensemble pour former un conteneur selon la revendication 4, **caractérisé en ce que** lesdits moyens supports (27), (28) comprennent, de part et d'autre desdits montants centraux (23), au moins deux longerons montés coulissant longitudinalement sur ledit plafond, l'un (28) desdits longerons supportant lesdites sources sismiques marines (11) et l'autre (27) desdits longerons supportant au moins un flotteur (3) que comprend chaque batterie.

6. Ensemble pour former un conteneur selon l'une quelconque des revendications 1 à 5, **caractérisé en ce que** ledit plancher (22) et/ou ledit plafond (21) comprennent un cadre (221), (2111) rigidifié par un treillis de poutrelles (222).

7. Ensemble pour former un conteneur selon l'une quelconque des revendications 1 à 6, **caractérisé en ce qu'**au moins deux jambes de force (25) relient lesdits montants centraux (23) audit plancher (22) et/ou audit plafond (21).

8. Ensemble pour former un conteneur selon l'une quelconque des revendications 1 à 7, **caractérisé en ce que** lesdits montants centraux (23) sont reliés deux à deux par au moins une poutre (26) formant avec lesdits montants centraux (23) un treillis.

9. Procédé d'utilisation d'un ensemble selon l'une quelconque des revendications 1 à 8, **caractérisé en ce qu'**il comprend les étapes de :
- introduction desdites batteries entre ledit plafond (21) et ledit plancher (22), lesdits montants latéraux (23) étant démontés de façon qu'au moins une desdites sources sismiques (11) puissent s'étendre au-delà de la largeur de ladite structure de base (2) ;
- confinement desdites batteries dans ladite structure de base (2) de telle sorte que lesdites batteries s'inscrivent dans la largeur de ladite structure de base(2) ;
- fixation desdits montants latéraux (5) sur ladite structure de base (2).

10. Procédé d'utilisation selon la revendication 9, **caractérisé en ce qu'**il comprend une étape de fixation desdites sources sismiques (11) sur lesdits montants centraux (23) ou sur des moyens rapportés sur lesdits montants centraux (23).
